# EUROPEAN PATENT APPLICATION

(11) **EP 2 151 880 A1**
(43) Date of publication of application: **10.02.2010**
(21) Application number: 09166584.4
(22) Date of filing: 28.07.2009
(51) Int. Cl.: H01M 2/10, H01M 10/50

(54) **Low thermal spread battery module**

(30) Priority: 06.08.2008 US 221704
(71) Applicant: Delphi Technologies, Inc., Troy, MI 48007 (US)
(72) Inventor: Ghosh, Debashis, Williamsville, NY 14221 (US); Hambruch, John R., Burt, NY 14028 (US)
(74) Representative: Robert, Vincent

(57) **Abstract**

A battery pack **(20)** assembly including a plurality of cells **(28)** surrounded by a spacer **(56)** for creating a radial space **(58)** between the cell **(28)** and cylindrical sections **(34, 36)** defining a casing **(26).** At least two of the cylindrical sections **(34, 36)** are conical or in different radial positions to define differing volumes between the respective two cells **(28).** Each of the cylindrical sections **(34, 36)** may be eccentrically offset from the respective cell **(28)** to define a greater radial space **(58)** adjacent the air inlet chamber **(48)** and a lesser radial space **(58)** adjacent the respective exit to increase the velocity of the discharging air adjacent the respective exit. Each of the cylindrical sections **(34, 36)** may have a casing undulating surface **(60)** extending circumferentially and/or each of the walls of the cells **(28)** may have a similar cell undulating surface **(62)** to increase the cooling capacity of the cooling air.

## Description

### Technical Field

The present invention relates to a battery pack assembly for providing electrical power.

### Background of the Invention

It is well known to combine a number of battery packs, each including a number of individual cells, for providing electrical power. Heat is generated as electrical current flows into and out of the cells, which heat can have a significant negative impact on the performance and lifetime of the cells and of the battery pack assembly as a whole, if the heat is not effectively managed. Limiting the temperature difference from cell to cell in a battery pack can be important in maximizing the performance and lifetime of the entire battery pack assembly.

To maintain the battery packs and the cells at a desired temperature, a cooling system is often provided within the battery pack assembly. Conventionally, these cooling systems pass air over and around the battery packs and the cells via an inlet manifold and an outlet manifold. In this type of system, the cooling air absorbs heat as it passes over the cells and loses its capacity to absorb heat as it passes over the cells to create temperatures cooler near the inlet manifold than the warmer temperatures near the outlet manifold. As an example, the U.S. Patent 6,569,556 to Zhou et al., discloses a cooling system including an inlet manifold and an outlet manifold that direct an air flow through the cells.

To convey cooling air over the cells, these types of cooling systems define, in each battery pack, an air path from the inlet manifold, over the cells, and to the outlet manifold. Each of the air paths includes an air inlet chamber extending the length of the respective battery pack. Each air path is defined on one side by the cylindrical walls of the cells. Each of the cells has an exposed portion being the portion of the respective cell adjacent and exposed to the air inlet chamber. Each of the battery packs includes a casing having a front and a back for nesting the cells in a stacked configuration. Each of the cells includes a spacer wrapping around the cylindrical wall of the cell for creating a radial space extending radially between the cell and the casing longitudinally adjacent the spacer.

One known type of casing includes a plurality of cylindrical sections each axially aligned along the cell axis of the stack and circling around a semi-cylindrical portion of one of the cells of the stack with each of the cylindrical sections associated with one of the cells for defining and enclosing the radial space around the semi-cylindrical portion of the respective cell. The casing includes a reverse-L-shaped piece spaced from a remainder portion of the stack and further defining the air inlet chamber as the enclosed space around the remainder portion of the stack. The aligned cylindrical sections and the reverse-L-shaped piece combine to completely enclose the stack with the cylindrical sections enclosing the semi-cylindrical portion of the respective cells and the reverse-L-shaped piece enclosing the remainder portion. Each of the cylindrical sections defines an exit axially aligned in the respective cylindrical section of the casing diametrically opposite to the reverse-L-shaped for discharging air away from the respective cell.

Although the prior art discloses systems that cool cells and within a battery pack assembly by passing cooling air through the assembly, significant temperature differences occur from cell to cell due to the non-uniform nature of the cooling air. These temperature differences are detrimental to the performance and lifetime of the battery pack assembly.

### Summary of the Invention

The invention provides for such a battery pack assembly wherein at least two of the cylindrical sections are in different radial positions relative to the cell axis to define differing volumes in the radial spaces between the respective two cells.

By differing the volume of the spaces around the cells, the volume of cooling air flowing over the cells via the respective radial spaces will also differ. As the volumes of cooling air are different, the capacity of that cooling air to absorb heat and cool the respective cell differs. Accordingly, the volume of the cooling air can be metered from cell to cell to achieve minimal temperature difference from cell to cell.

Also, each cylindrical section around a respective cell can be eccentrically offset from the cell axis to define a greater radial space adjacent the air inlet chamber and a lesser radial space adjacent the respective exit for increasing the velocity of the discharging air adjacent the respective exit.

Such an increase in the velocity of the discharging air adjacent the respective exit increases the heat transfer coefficient of the cooling air adjacent the respective exit, and thus increases its ability to absorb heat and cool more effectively.

Additionally, each cylindrical section around a respective cell may include a casing undulating surface extending circumferentially to define longitudinally extending alternating valleys and peaks with the valleys facing radially outwardly and the peaks facing radially inwardly. Each wall of each cell may include a cell undulating surface extending circumferentially to define longitudinally extending alternating valleys and peaks with the valleys facing radially inwardly and the peaks facing radially outwardly. The inwardly facing valleys of cell undulating surface align radially with the outwardly facing valleys of the casing undulating surface.

This alignment creates unsteady laminar flow of the cooling air thereby increasing the cooling capacity of the cooling air.

### Brief Description of the Drawings

Other advantages of the present invention will be readily appreciated, as the same becomes better understood by reference to the following detailed description when considered in connection with the accompanying drawings wherein:

Figure 1 is a fragmentary perspective view of an embodiment of the invention;

Figure 2 is a perspective view and in partial cross-section of a pair of battery packs used in the embodiment of Figure 1;

Figure 3 is a fragmentary front perspective view with half of the casing removed to show the cells;

Figure 4 is a schematic view showing the eccentrical offset of the cylindrical sections surrounding the cells;

Figure 5 is a schematic view illustrating different radial spaces surrounding the cells; and

Figures 6-9 are schematic views showing the shields and the undulating surfaces to control flow along the axially aligned and successive cells along each of the stacks as positioned along the axial air flow path from the first cell at the front end of the stack (Figure 6) to the last cell at the back of the stack (Figure 9).

### Description of the Preferred Embodiment

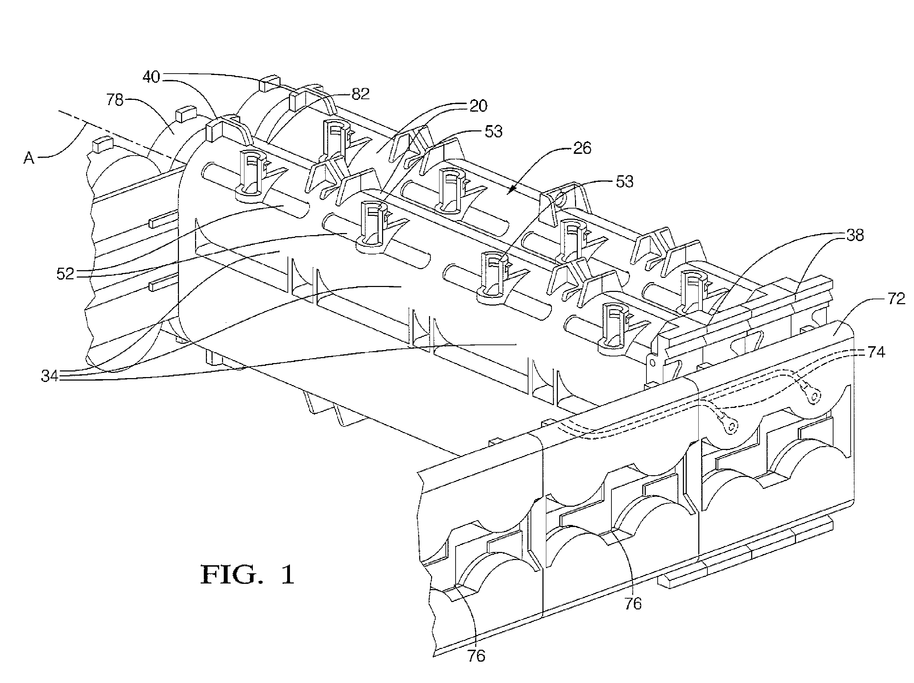

Referring to the Figures, wherein like numerals indicate corresponding parts throughout the several views, a battery pack assembly for providing electrical power is shown, in part, in Figure 1. The battery pack assembly comprises a plurality of battery packs **20,** each generally indicated.

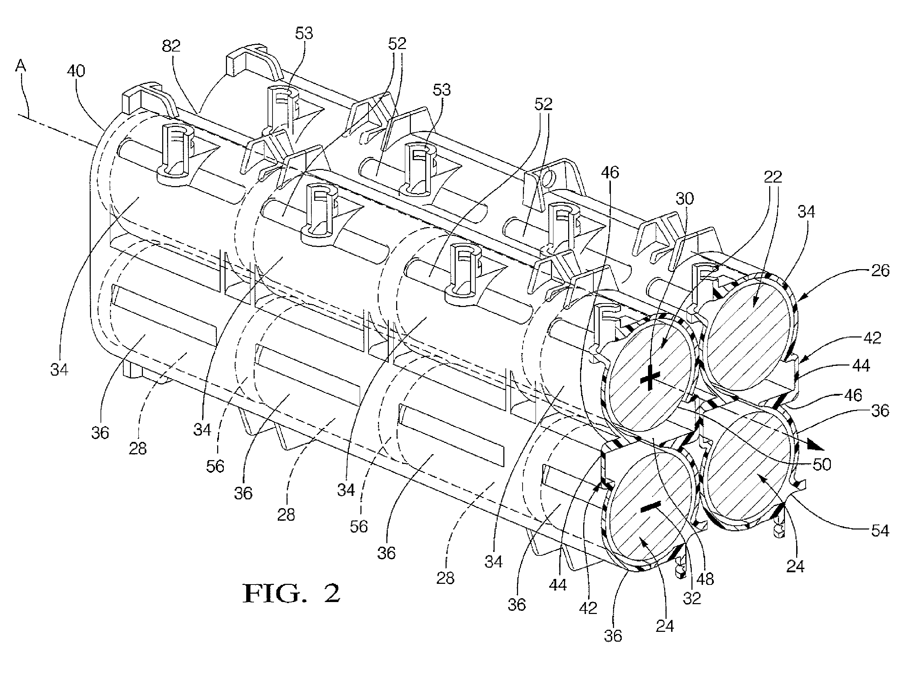

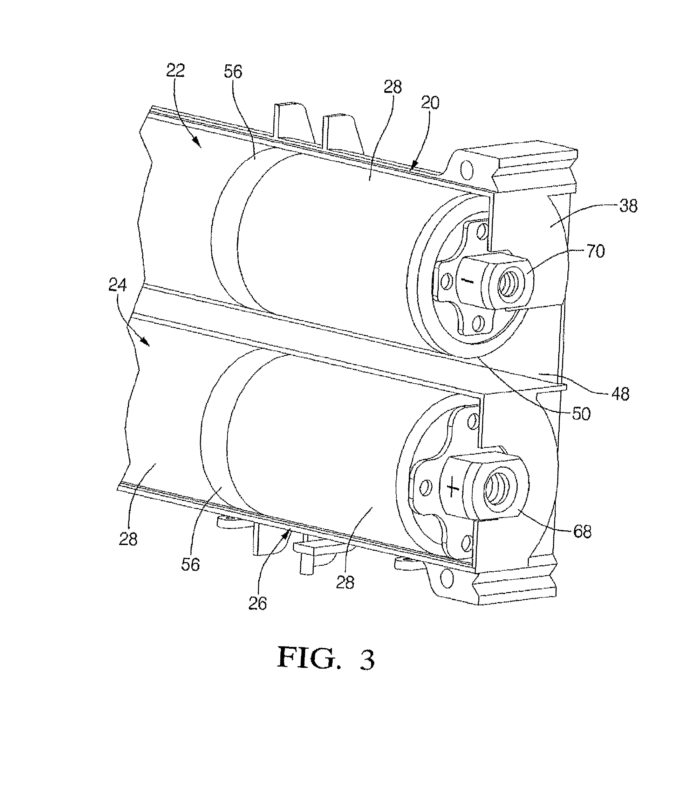

The battery packs **20** are disposed in a side by side relationship, a pair of which are shown in Figure 2. Each battery pack **20** extends longitudinally and includes an upper stack **22,** a lower stack **24,** and a casing **26** supporting the stacks **22, 24.** All of the stacks **22, 24** are of equal or the same length and extend along parallel and spaced axes **A A.** Although only one axis **A A** is shown for clarity, each stack extends along an axis **A A.** Each stack includes a plurality of cylindrical cells **28** and each cell **28** defines a cylinder and has an anode **30** at one end and a cathode **32** disposed at the opposite end of the cylinder for storing and conducting electrical power. The cells **28** are arranged in cathode-to-anode relationship with one another along the respective axis **A,** as is well known in the art. The anodes **30** of the cells **28** in the upper stack **22** face in one direction while the anodes **30** of the cells **28** in the lower stack **24** face in the opposite direction, as illustrated in Figure 3. As such, the cells **28** of each stack are connected to one another in electrical series connection.

The casing **26** includes a plurality of upper cylindrical sections **34,** a plurality of lower cylindrical sections **36,** a front end cover **38,** and a back end cover **40.** The front end cover **38** is disposed at the front of the battery pack **20** while the back end cover **40** is disposed at the back of the battery pack **20.** The end covers **38, 40** enclose the ends of the casings **26.** The casing **26** nests the upper stack **22** above the lower stack **24.**

The upper cylindrical sections **34** each axially align with one another along the axis **A A** of the cell **28** of the upper stack **22** and collectively extend along the length of the upper stack **22.** Each of the upper cylindrical sections **34** is associated with one of the cells **28** and wraps around a semi-cylindrical portion of the respective cell **28** of the upper stack **22.** As illustrated in Figure 2, the casing **26** also includes a reverse-L-shaped piece **42,** generally indicated, to enclose a remainder portion of the upper stack **22.** The remainder portion is the portion of the upper stack **22** that is not included in the semi-cylindrical portion. In other words, the remainder portion and the semi-cylindrical portion make up the upper stack **22.** The reverse-L-shaped piece **42** includes a long leg **44** that extends vertically and tangentially from the aligned upper cylindrical sections **34** adjacent to the right-hand side of the upper stack **22.** The reverse-L-shaped piece **42** also includes a short leg **46** that extends transversely to the long leg **44** and connects with the respective upper cylindrical section **34** adjacent to the bottom side of the upper stack **22.** The upper cylindrical sections **34** and the reverse-L-shaped piece **42** combine to completely enclose the upper stack **22.** More specifically, the upper cylindrical sections **34** enclose the respective semi-cylindrical portions of the respective cells **28** and the reverse-L-shaped piece **42** encloses the remainder portion. The long leg **44** and the short leg **46** define two sides of a reverse-L-shaped air inlet chamber **48.** The remaining side of the air inlet chamber **48** is defined by the cylindrical walls of the remainder portion of the upper stack **22.** The air inlet chamber **48** supplies air to the cells **28.**

The air inlet chamber **48** is generally right-triangular in cross section. The right-triangular cross section has two legs **44, 46** and a hypotenuse. The long leg **44** and the short leg **46** define the legs **44, 46** of the right-triangular cross section and the cylindrical wall of the remainder portion of the upper stack **22** define the hypotenuse of the right-triangular cross section. The hypotenuse has a slight curvature due to the cylindrical shape of the walls of the cells **28.** The air inlet chamber **48** extends along the length of the upper stack **22.**

The remainder portion of the upper stack **22** creates an exposed portion **50** on each of the cells **28** that comprise the upper stack **22.** The exposed portion **50** is the portion of each cell **28** that is adjacent and directly exposed to the air inlet chamber **48.** Further, the exposed portion **50** of each cell **28** is enclosed by and spaced from the reverse-L-shaped piece **42.** The semi-cylindrical portion of the upper stack **22** creates a portion on each of the cells **28** of the upper stack **22** that is not directly exposed to the air inlet chamber **48.**

Each of the upper cylindrical sections **34** of the casing **26** also defines an upper exit **52** that is axially aligned in the respective upper cylindrical section **34** diametrically opposite the reverse-L-shaped piece **42.** The upper exit **52** discharges cooling air flowing from the air inlet chamber **48** and over the respective cell **28** of the upper stack **22.** Each upper exit **52** includes a thermistor well **53** extending upwardly from and being in communication with the respective upper exit **52** for measuring the temperature of the cooling air exiting the upper exit **52.**

The lower cylindrical sections **36** of the casing **26** have a configuration identical to that of the upper cylindrical sections **34.** Each of the lower cylindrical sections **36** is disposed directly below the respective upper cylindrical section **34** and is rotated one hundred eighty degrees (180°) with respect to the upper cylindrical section **34.** In this arrangement, the short leg **46** of the upper reverse-L-shaped piece **42** is tangent to the lower cylindrical sections **36** and the short leg **46** of the lower reverse-L-shaped piece **42** is tangent to the upper cylindrical sections **34.** As such, the reverse-L-shaped air inlet chambers **48** are open to one another and in fluid communication.

The remainder portion of the lower stack **24** creates an exposed portion **50** on each of the cells **28** that comprise the lower stack **24.** The semi-cylindrical portion of the lower stack **24** creates a portion on each of the cells **28** of the lower stack **24** that is not directly exposed to the air inlet chamber **48.**

Similar to the upper cylindrical sections **34,** each of the lower cylindrical sections **36** defines a lower exit **54** that is axially aligned in the respective lower cylindrical section **36** diametrically opposite the reverse-L-shaped piece **42** and diametrically opposite the upper exit **52** of the respective upper cylindrical section **34.** The lower exit **54** discharges cooling air flowing from the air inlet chamber **48** and over the respective cell **28** of the lower stack **24.**

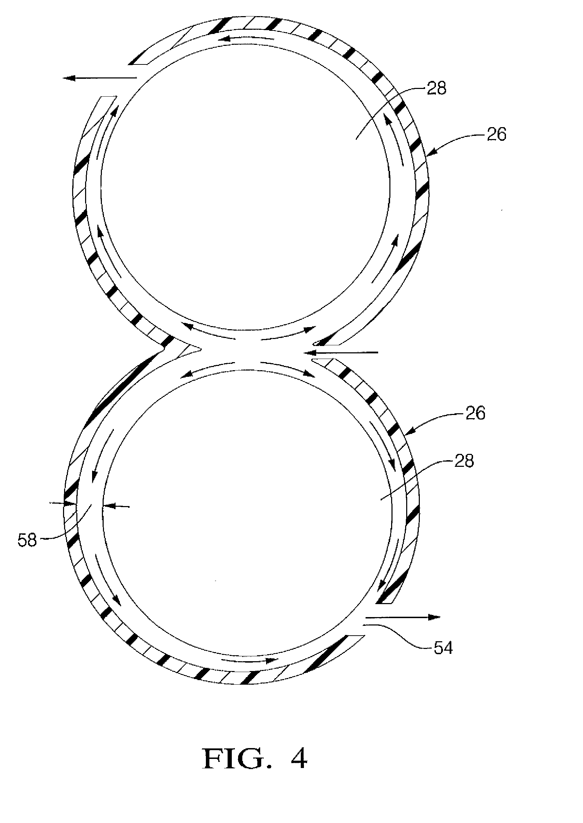

Additionally, each cell **28** includes a spacer **56** which is cylindrical in shape and wraps around the cell **28** to create a radial space **58,** shown in Figure 4, which radial space **58** extends radially between the cell **28** and the casing **26.** The radial spaces **58** allow air flow between the cells **28** and the respective cylindrical section of the casing **26.** Each of the spacers **56** creates the respective radial space **58** by preventing the respective cylindrical section of the casing **26** from contacting the cells **28.** The spacer **56** is made out of an insulating material such as rubber or plastic.

Each of the upper cylindrical sections **34** wraps around the semi-cylindrical portion of one of the cells **28** of the upper stack **22** to define and enclose an upper portion of the radial space **58** around the semi-cylindrical portion of the respective cell **28** of the upper stack **22.** Similarly, each of the lower cylindrical sections **36** wraps around the semi-cylindrical portion of one of the cells **28** of the lower stack **24** to define and enclose a lower portion of the radial space **58** around the semi-cylindrical portion of the respective cell **28** of the lower stack **24.** The air path created by the cylindrical sections **34, 36** and the spacers **56** flows from the two reverse-L-shaped air inlet chambers **48,** along the length of the stacks **22, 24,** around the cells **28** via the space created by the spacers **56,** and out the exits **52, 54.**

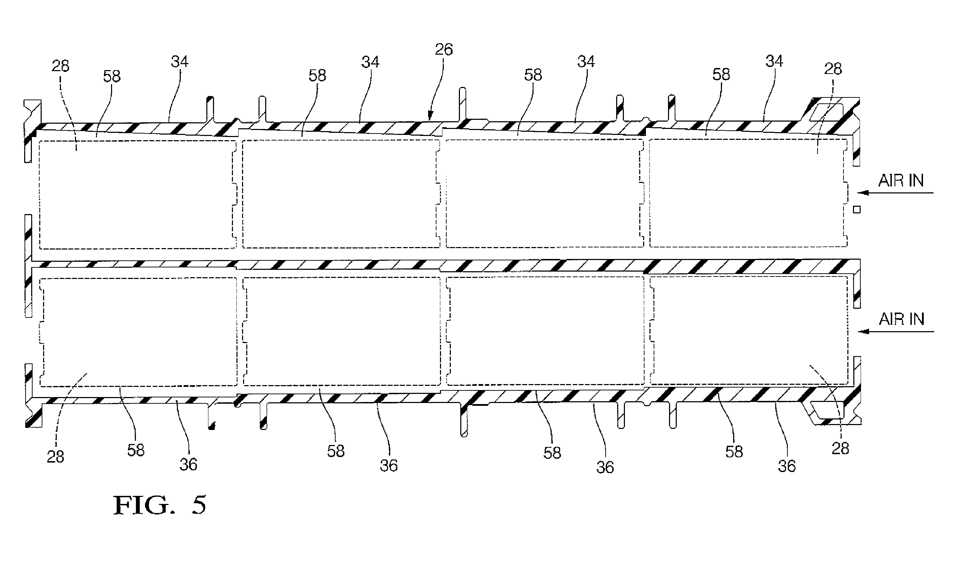

As shown in Figure 5, at least two of the upper cylindrical sections **34** are in different radial positions relative to the axis **A A** of the cell **28** so as to define differing volumes in the radial spaces **58** between the respective two cells **28.** Similarly, at least two of the lower cylindrical sections **36** are in different radial positions so as to define differing volumes in the radial spaces **58** between the respective two cells **28.** In one embodiment, all of the cylindrical sections **34, 36** can differ from one another thereby creating radial spaces **58** of differing volumes around each of the cells **28.** By varying the volume of the spaces around the cells **28,** the volume of cooling air flowing over the cells **28** via the respective radial spaces **58** will also vary accordingly. As the volume of cooling air changes, the ability of that cooling air to cool the respective cell **28** changes as well. As an example, a particularly hot cell **28** can have a larger radial space **58.** As such, more air will flow over the hot cell **28** and the hot cell **28** will be cooled more than another cool cell **28,** which would have a smaller radial space **58.** By metering the airflow around each of the cells **28** in this manner, the warmer cells **28** at the back of the battery pack **20** are cooled more; and the cooler cells **28** at the front of the battery pack **20** are cooled less, hence, the overall temperature difference from cell **28** to cell **28** is minimized.

In one embodiment, the cylindrical sections **34, 36** can create radial spaces **58** that are generally cylindrical in shape and constant longitudinally along the respective cell **28,** albeit, the radial spaces **58** may differ from cell **28** to cell **28.** In other words, the radial space **58** (from the wall of the cell **28** to the casing **26** around each cell **28** is the same thickness along the length of each respective cell **28.** Alternatively, the cylindrical sections **34, 36** can create radial spaces **58** that are generally conical in shape whereby the radial spaces **58** taper longitudinally along the respective cell **28.** In this case, the thickness of the radial space **58** adjacent the front of a particular cell **28** would be less than the thickness of the radial space **58** adjacent the rear of the particular cell **28,** i.e., the space will be generally triangular in cross section when viewed from the side of the battery pack **20,** as shown in Figure 5. In one embodiment, the space can taper from. mm to. mm from front to back.

As shown in Figure 4, each of the upper cylindrical sections **34** around the respective cell **28** of the upper stack **22** can be eccentrically offset from the upper stack **22** to define a greater radial space **58** adjacent the air inlet chamber **48** and a lesser radial space **58** adjacent the respective upper exit **52.** The lower cylindrical sections **36** can have the same configuration and are rotated one hundred eighty degrees (180°). Such an offset disposition increases the velocity of the discharging air adjacent the respective exit. This increase in velocity increases the heat transfer coefficient of the cooling air adjacent the respective exit.

As the cooling air flows around the respective cell **28,** two streams are formed. These two streams are mirror images of one another. The two streams start at the air inlet chamber **48** and meet at the respective exit. As the streams meet, the two streams collide thereby creating an impingement cooling regime. Impingement cooling yields a very high heat transfer coefficient and, as such, cools quite efficiently. The combination of the increase of velocity of the cooling air and the impingement cooling (both adjacent the respective exit) results in extremely efficient cooling. In this case, the respective exits **52, 54** can be wider, thus reducing the pressure drop across the battery pack **20.**

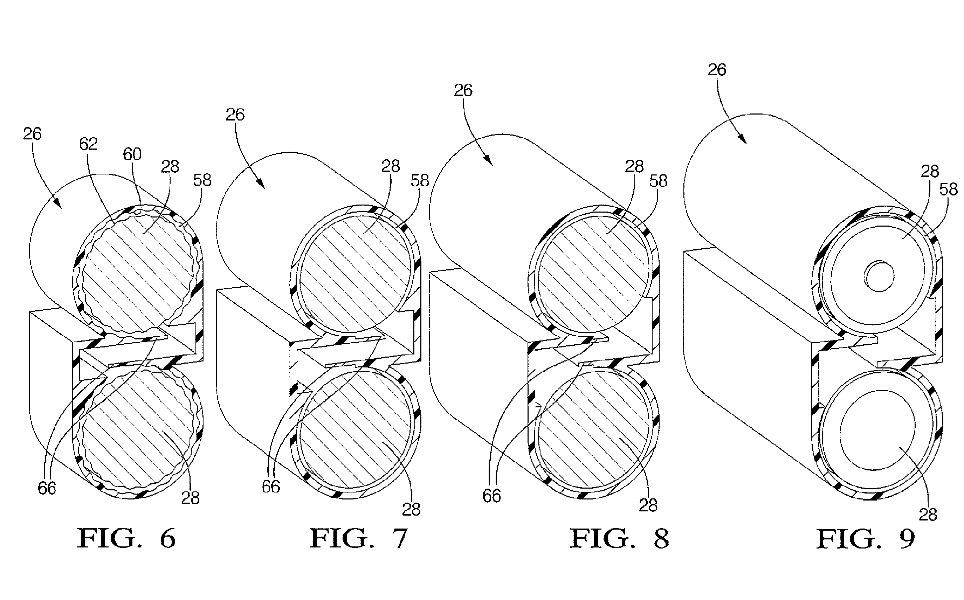

As shown in Figure 6, each of the upper cylindrical sections **34** of the casing **26** around the respective cells **28** of the upper stack **22** can have a casing undulating surface **60** that extends circumferentially to define longitudinally extending alternating valleys and peaks. The valleys face radially outwardly and the peaks face radially inwardly. Each of the lower cylindrical sections **36** of the casing **26** around the respective cells **28** of the lower stack **24** have an identical casing undulating surface **60.**

Each of the walls of the cells **28** can have a cell undulating surface **62** that extends circumferentially to define longitudinally extending alternating valleys and peaks. The valleys face radially inwardly and the peaks face radially outwardly. The inwardly facing valleys of the cell undulating surface **62** of the cells **28** align radially with the outwardly facing valleys of the casing undulating surface **60** of the respective cylindrical section of the casing **26.** This alignment of the undulating surfaces **60, 62** creates an unsteady laminar flow of the cooling air which increases the cooling capacity of the cooling air with a minimal increase in pressure drop. Alternatively, the inwardly facing valleys of the cell undulating surface **62** of the cells **28** can align radially with the outwardly facing peaks of the casing undulating surface **60** of the respective cylindrical section of the casing **26.** This alignment of the undulating surfaces **60, 62** creates an alternative form of unsteady laminar flow of the cooling air that is different from the alignment discussed above. Additionally, the undulating surfaces **60, 62** can align in a manner such that they are circumferentially staggered from one another.

In one embodiment, the pattern of valleys and peaks can alternate from cell **28** to cell **28,** i.e., the number of valleys and peaks can vary from cell **28** to cell **28.** An increase in the number of valleys and peaks will result in a higher heat transfer coefficient around the respective cell **28.** This allows the cells **28** to be further metered. Hotter cells **28** will have more valleys and peaks than cooler cells **28,** hence, the overall temperature drop across the battery pack **20** can be minimized.

In the alternative, the battery pack **20** can utilize cells **28** that have a rectangular cross section. In this case, the walls of the cells **28** can still have a surface that undulates. The cells **28** can be disposed in the respective cylindrical section. The corners of the cells **28** will, in this case, contact the respective cylindrical section, thus eliminating the need for a spacer **56.**

As shown in Figures 6, 7, and 8, plurality of shields **66** can be disposed in the air inlet chamber **48.** Each shield **66** of the plurality is associated with one of the cells **28** of the particular battery pack **20.** Each of the shields **66** blocks a portion of the cooling air from the exposed portion **50** of the respective cell **28.** In doing so, each of the shields **66** limits the amount of cooling air conveyed to the radial space **58** around the respective cell **28.** Collectively, the shields **66** work to divide and distribute portions of the cooling air to the respective cells **28.** As a result, more of the cooling air becomes available to the more rearward cells **28** because the cooling air is not all utilized by the more forward cells **28,** hence the flow of air over the cells **28** is effectively metered by the shields **66.**

By utilizing the shields **66** to reduce the size of the exposed portion **50** of the respective cell **28,** less cooling air is exposed to the respective cells **28** at the front of the battery pack **20.** As such, the air that is not exposed remains cool, i.e., the unexposed air is not heated up by the cells **28** at the front of the battery pack **20.** The air that reaches the back of the battery pack **20,** is cooler in temperature and can better cool the cells **28** at the back of the battery pack **20.** As a result, the warmer cells **28** at the back of the battery pack **20** are cooled more; and the cooler cells **28** at the front of the battery pack **20** are cooled less, hence, the overall temperature difference from cell **28** to cell **28** is minimized.

Each of the shields **66** extends longitudinally along the length of one of the cells **28.** Each of the shields **66** can additionally extend longitudinally from one spacer **56** to the next successive spacer **56.** Each of the shields **66** is generally rectangular in shape and has an area and extends longitudinally along the length of one of the cells **28.** The shields **66** can be molded or formed into the casing **26** and, as such, would be integral to the casing **26.** Alternatively, the shields **66** can be separate from the casing **26** and can be attached in place as necessary. Each of the shields **66** is tangential to the cylindrical walls of the exposed portion **50** of the respective cell **28.** Each of the shields **66** can differ in area from shield **66** to shield **66** so as to differ the exposed portion **50** of the respective cell **28** from cell **28** to cell **28.**

As an example, Figure 6 illustrates the front cells **28** of each of the stacks **22, 24** and the respective shields **66,** which shields **66** are larger to block a larger portion of the incoming cooling air. Figure 7 illustrates the cells **28** that are axially aligned with and in front-to-back succession with the cells **28** of Figure 6. Here, the shields **66** are slightly smaller in area and block a slightly smaller portion of cooling air. Figure 8 illustrates the cells **28** that are axially aligned with and in front-to-back succession with the cells **28** of Figure 7. Here, the shields **66** are significantly smaller than those previous. As a result, significantly less cooling air will be blocked, i.e., more cooling air will reach the respective cells **28.** Finally, Figure 9 illustrates the cells **28** that are axially aligned with and in front-to-back succession with the cells **28** of Figure 8. Here, no shields **66** are utilized and no cooling air is blocked, i.e., the respective cells **28** receive a full stream of cooling air. In doing this, the exposed portions **50** of the respective cells **28** increase from front to back. The hotter cells **28** at the back of each battery pack **20** receive more cooling air than the cooler cells **28** at the front of the battery pack **20.** Also, the air received by the hotter cells **28** at the back of each battery pack **20** is cooler in temperature than it would be without the blocking pieces. As a result, the temperature difference from cell **28** to cell **28** and from front to back is minimized.

Alternatively, the shape of the shields 66 can taper from front to back of the respective cell **28.** Also, the shape of the shields **66** can vary to adapt to any other particular configuration of cells **28.** Also, each of the shields **66** can extend partially along the length of the respective cell **28,** i.e. each shield **66** does not have to extend the entire length of the respective cell **28.**

The end covers **38, 40** are generally rectangular in shape. Each of the front end covers **38** defines an entry that aligns with the air inlet chambers **48** for conveying the cooling air through the end cover and into the air inlet chambers **48.** The back end covers **40** are solid and prevent cooling air from exiting therethrough. As such, the cooling air is forced over the cells **28** and out the upper and lower exits **52, 54.**

As shown in Figure 3, each of the end covers **38, 40** also includes a positive terminal **68** that aligns with the anode **30** of the outermost the cell **28** of one stack and a negative terminal **70** that aligns with the cathode **32** of the outermost the cell **28** of the other stack. These terminals **68, 70** protrude through their respective end cover and contact the anode **30** or cathode **32** of the respective cell **28** to transmit the electrical power generated by the cells **28** in the stacks **22, 24.** To facilitate the loading of the cells **28** into the casings **26,** each casing **26** is split longitudinally into two pieces that snap together.

An inlet bus bar **72** is disposed along the front end covers **38** of the battery packs **20** for interconnecting the battery packs **20.** The arrangement of the battery packs **20** is such that alternate battery packs **20** having the positive terminal **68** extending from the upper stack **22** are interleaved with battery packs **20** having the positive terminal **68** extending from the lower stack **24.** In other words, adjacent battery packs **20** have the reverse terminal configuration. If one battery pack **20** has the positive terminal **68** on the top, the next adjacent battery pack **20** has the positive terminal **68** on the bottom. The inlet bus bar **72** includes a plurality of connection wires **74** for electrically connecting the stacks **22, 24** of one battery pack **20** to one another and the battery packs **20** to one another in series connection. The connection wires **74** of the inlet bus bar **72** connect the positive terminal **68** of one battery pack **20** to the negative terminal **70** of the next adjacent battery pack **20.**

The inlet bus bar **72** defines a plurality of openings **76,** which openings **76** align with the air inlet chambers **48** for conveying the cooling air through the inlet bus bar **72** and into the air inlet chambers **48.** The shape of these openings **76** and the subsequent alignment with the air inlet chambers **48** can vary depending upon the configuration of the battery pack **20** assembly.

Referring generally to all embodiments, an outlet bus bar **78** is disposed along the back end covers **40** of the battery packs **20** for interconnecting the stacks **22, 24** of each battery pack **20.** The outlet bus bar **78** also includes a plurality of connection wires **74.** The connection wires **74** of the outlet bus bar **78** connect the positive terminal **68** of one battery pack **20** to the negative terminal **70** of the same battery pack **20.** The connections of the inlet bus bar **72** and outlet bus bar **78** combine to connect the all the cells **28** of all the battery packs **20** in series.

The outlet bus bar **78** is solid and prevents air from exiting therethrough. As such, the cooling air is forced over the cells **28** and out the upper and lower exits **52, 54.**

A housing (not shown) encloses the battery packs **20.** The side by side relationship of the casings **26** of the battery packs **20** creates V-shaped channels **82** between adjacent upper cylindrical sections **34** and between adjacent lower cylindrical sections **36.** The upper or lower cylindrical sections **34, 36** define the walls of the respective channels **82** while the housing defines top or bottom of the channels **82.** Each channel **82** extends the length of the battery pack **20.** The upper and lower exits **52, 54** defined by the casing **26** discharge cooling air away from the cells **28** and into the channels **82,** which convey the air away from the assembly.

An inlet manifold (not shown) and an outlet manifold (not shown) are disposed at the front and back ends of the battery packs **20,** respectively, to establish a flow of cooling air through the assembly. The housing defines a hole through which the inlet manifold supplies cooling air to the system. The housing also defines a hole through which cooling air is conveyed to the outlet manifold, which discharges the cooling air from the assembly.

The inlet manifold extends parallel to the inlet bus bar **72** and is spaced from the front end covers **38** of the casing **26.** The inlet bus bar **72** is disposed between the inlet manifold and the front end covers **38.** The outlet manifold extends parallel to the inlet manifold and along the back end covers **40** of the casing **26.** The outlet bus bar **78** is disposed between the outlet manifold and the backs of the battery packs **20.**

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A battery pack **(20)** assembly for providing electrical power comprising:
a plurality of battery packs **(20)** each including an upper stack **(22)** and a lower stack **(24)** extending parallel to one another and disposed in a side by side relationship and defining an air path therethrough for cooling;
each of said stacks **(22, 24)** extending along a cell **(28)** axis **(A)** and including a plurality of cells **(28)** each having a wall and defining a cylinder for storing and transmitting electrical power;
each of said air paths including an air inlet chamber **(48)** extending the length of said respective battery pack **(20)** and being defined on one side by said cylindrical walls of said cells **(28)** for supplying air to said cells **(28);**
each of said battery packs **(20)** including a casing **(26)** having a front and a back for nesting said stacks **(22, 24)** one above the other and for enclosing said stacks **(22, 24);**
each of said cells **(28)** including a spacer **(56)** being made of an insulating material and wrapping around said cylindrical wall of said cell **(28)** for creating a radial space **(58)** extending radially between said cell **(28)** and said casing **(26)** longitudinally adjacent said spacer **(56);**
said casing **(26)** including a plurality of cylindrical sections **(34, 36)** each axially aligned along said cell **(28)** axis **(A)** of said stack and circling around a semi-cylindrical portion of one of said cells **(28)** of one of said stacks **(22, 24)** with each of said cylindrical sections **(34, 36)** associated with one of said cells **(28)** for defining and enclosing said radial space **(58)** around said semi-cylindrical portion of said respective cell **(28);** and
at least two of said cylindrical sections **(34, 36)** being in different radial positions relative to said cell **(28)** axis **(A)** to define differing volumes in said radial spaces **(58)** between said respective two cells **(28).**

2. An assembly as set forth in claim 1 wherein said cylindrical sections **(34, 36)** are cylindrical for maintaining each of said radial spaces **(58)** constant longitudinally along each of said respective cells **(28).**

3. An assembly as set forth in claim 1 wherein each of said cylindrical sections **(34, 36)** are conical for increasing said radial spaces **(58)** longitudinally along each of said cells **(28).**

4. An assembly as set forth in any of the preceding claims wherein said casing **(26)** includes a reverse-L-shaped piece **(42)** having a long leg **(44)** extending tangentially from said aligned cylindrical sections **(34, 36)** to a short leg **(46)** extending transversely and spaced from a remainder portion of said stack for creating an enclosed space around said remainder portion of said stack to define said air inlet chamber **(48),** wherein said cylindrical sections **(34, 36)** and said reverse-L-shaped piece **(42)** combine to completely enclose said cells **(28)** of said stack with said cylindrical sections **(34, 36)** enclosing said semi-cylindrical portions of said respective cells **(28)** and said reverse-L-shaped piece **(42)** enclosing said remainder portions, wherein said air inlet chamber **(48)** is defined by said long leg **(44)** and said short leg **(46)** and said cylindrical walls of said remainder portion of said stack.

5. An assembly as set forth in claim 4 wherein each of said cylindrical sections **(34, 36)** defines an exit axially aligned in said respective cylindrical section of said casing **(26)** diametrically opposite to said reverse-L-shaped piece **(42)** for discharging air away from said respective cell **(28).**

6. An assembly as set forth in any of the preceding claims wherein each of said cylindrical sections **(34, 36)** around said respective cell **(28)** of said stack is eccentrically offset from said respective cell **(28)** to define a greater radial space **(58)** adjacent said air inlet chamber **(48)** and a lesser radial space **(58)** adjacent said respective exit for increasing the velocity of the discharging air adjacent said respective exit.

7. An assembly as set forth in any of the preceding claims wherein each of said cylindrical sections **(34, 36)** around said respective cell **(28)** of said stack has an undulating surface extending circumferentially to define longitudinally extending alternating valleys and peaks with said valleys facing radially outwardly and said peaks facing radially inwardly for creating unsteady laminar flow of the cooling air to increase the cooling capacity of the cooling air.

8. An assembly as set forth in claim 7 wherein each of said walls of said cells **(28)** has an undulating surface extending circumferentially to define longitudinally extending alternating valleys and peaks with said valleys facing radially inwardly and said peaks facing radially outwardly with said inwardly facing valleys of said undulating surface of said cells **(28)** aligning radially with said outwardly facing valleys of said undulating surface of said respective cylindrical section for creating unsteady laminar flow of the cooling air to increase the cooling capacity of the cooling air.

9. An assembly as set forth in any of the preceding claims in combination with claim 4 wherein said remainder portion of said stack creates an exposed portion **(50)** on each of said cells **(28)** of said stack with said exposed portion **(50)** of each of said cells **(28)** being the portion of each cell **(28)** adjacent and directly exposed to said air inlet chamber **(48)** and enclosed by and spaced from said reverse-L-shaped piece **(42),** and including a plurality of shields **(66)** disposed in said air inlet chamber **(48)** with each of said shields **(66)** associated with one of said cells **(28)** for shielding a portion of the cooling air from said exposed portion **(50)** of said respective cell **(28)** to reduce the flow of cold air over said cells **(28).**

10. An assembly as set forth in claim 9 wherein each of said shields **(66)** is generally rectangular in shape and extends longitudinally along the length of one of said cells **(28).**

11. An assembly as set forth in claim 10 wherein each of said shields **(66)** is tangential to said cylindrical walls of said exposed portion **(50)** of said respective cell **(28).**

12. An assembly as set forth in any of the claims 9 to 11 wherein each of said shields **(66)** varies in area from shield **(66)** to shield **(66)** for varying the flow rate of cooling air from cell **(28)** to cell **(28).**

13. An assembly as set forth in any of the preceding claims including plurality of upper cylindrical sections **(34)** each axially aligning along said cell **(28)** axis **(A)** of said upper stack **(22)** and circling around a semi-cylindrical portion of one of said cells **(28)** of said upper stack **(22)** with each of said upper cylindrical sections **(34)** associated with one of said cells **(28)** for defining and enclosing said radial space **(58)** around said semi-cylindrical portion of said respective cell **(28)** and a plurality of lower cylindrical sections **(36)** each axially aligning along said cell **(28)** axis **(A)** of said lower stack **(24)** and circling around a semi-cylindrical portion of one of said cells **(28)** of said lower stack **(24)** with each of said lower cylindrical sections **(36)** associated with one of said cells **(28)** for defining and enclosing said radial space **(58)** around said semi-cylindrical portion of said respective cell **(28),** and wherein at least two of said upper cylindrical sections **(34)** being in different radial positions to define differing volumes in said radial spaces **(58)** between said respective two cells **(28)** and at least two of said lower cylindrical sections **(36)** being in different radial positions to define differing volumes in said radial spaces **(58)** between said respective two cells **(28).**
